(19) Europäisches Patentamt
European Patent Office
Office européen des brevets

(11) **EP 1 574 846 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(51) Int Cl.:
*G01N 25/72* *(2006.01)*    *B61K 9/10* *(2006.01)*

(21) Anmeldenummer: **05004885.9**

(22) Anmeldetag: **05.03.2005**

(54) **Verfahren zum Nachweis von Fehlern in Eisenbahnschienen**

Method for detecting flaws in railway rails

Méthode pour détecter des défauts dans les rails de chemin de fer

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **09.03.2004 DE 102004011843**

(43) Veröffentlichungstag der Anmeldung:
**14.09.2005 Patentblatt 2005/37**

(73) Patentinhaber:
- **DB Netz AG**
  **60468 Frankfurt am Main (DE)**
- **Fraunhofer-Gesellschaft zur Förderung der angewandten Forschung e.V.**
  **80686 München (DE)**

(72) Erfinder:
- **Schuhmacher, Silvia, Dr.**
  **10823 Berlin (DE)**

- **Maly, Heiko, Dr.**
  **39114 Magdeburg (DE)**
- **Walle, Günter**
  **66399 Mandelbachtal (DE)**

(74) Vertreter: **Zinken-Sommer, Rainer**
**Deutsche Bahn AG**
**Patentabteilung**
**Völckerstrasse 5**
**80939 München (DE)**

(56) Entgegenhaltungen:
**DE-A1- 10 025 066    DE-C1- 19 933 446**
**FR-A- 2 751 080    US-A- 3 020 745**
**US-A- 3 378 685    US-A- 4 480 928**

EP 1 574 846 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur berührungslosen Detektion von Fehlstellen in Eisenbahnschienen.

Die zerstörungsfreie Werkstoffprüfung ist in den vergangenen Jahren zu einem unverzichtbaren Bestandteil in der Sicherheitsphilosophie des spurgebundenen Schienenverkehrs geworden. Nicht zuletzt die Erfahrungen aus Versagensfällen unterschiedlicher Bauteile haben Bahnbetreiber, Industrie und Forschungseinrichtungen zu erheblichen Anstrengungen veranlasst, damit Schadensprozesse schon in einem möglichst frühen Entstehungsstadium erkannt und beseitigt werden können.

Insbesondere bei der Qualitätskontrolle neuer Eisenbahnschienen sowie für die Inspektionsüberprüfung von im Betrieb befindlichen Eisenbahnschienen sind zahlreiche Untersuchungsverfahren bekannt. So müssen die Schienen in bestimmten Zeitabständen bzw. nach vorgegebenen Lastaufnahmen (diese werden üblicherweise in Form von Lasttonnen, die eine Schiene seit Anbeginn ihrer jeweiligen Liegezeit überrollt haben, ermittelt) einer Prüfung auf Fehler, insbesondere Rissen oder Ausbrüchen, unterzogen werden. Diese Schadensbilder können durch Werkstoffermüdung, thermische Beanspruchung beim Bremsvorgang oder Verformungsvorgänge infolge der statischen und dynamischen Lasten hervorgerufen werden.

Entsprechend dem Stand der Technik werden verlegte Schienen auf Fehler im Schieneninnern überprüft, indem ein mit Ultraschalltechnik ausgestatteter Prüfzug die Schienen in regelmäßigen Abständen überfährt. Ein derartiges Verfahren ist beispielsweise in folgendem Tagungsbeitrag dargestellt: J. Tripschu; Einsatz von Schienenprüfzügen im Bereich Netz; 2. Fachtagung der DGZFP zur zerstörungsfreien Prüfung im Eisenbahnwesen, Wittenberge, März 2002. Zur weitergehenden Analyse dieser Fehler sind derzeit Entwicklungsaktivitäten auf dem Gebiet der Ultraschallgruppenstrahler in der Literatur verzeichnet, siehe z.B.: R. Krull, H. Hintze, H-M.Thomas, T.Heckl: Zerstörungsfreie Prüfung an Schienen heute und in der Zukunft; ZEVrail Glasers Annalen 127 (Juni / Juli 2003). Diese Verfahren haben jedoch den entscheidenden Nachteil, dass Schäden in der Oberfläche oder im oberflächennahen Bereich der Schienen, wie z.B. Headchecks oder Squats, nicht detektiert werden können.

Da es wirtschaftlich nicht mehr darstellbar ist, Eisenbahnschienen und Weichen von einem Streckenläufer visuell auf Oberflächenschäden überprüfen zu lassen, werden zum Nachweis sogenannter Headchecks auf Wirbelstrom basierende Verfahren sowohl in manuellen Prüfsystemen als auch in Schienenprüfzügen eingesetzt. Ein derartiges Verfahren ist z.B. in der DE 100 25 066 offenbart. Dennoch ist ein Nachweis von o-berflächennnahen oder von der Schienenoberfläche ausgehender flächiger Fehler - sogenannter Squats - mit keiner der obengenannten Methoden möglich.

Die US 3.020.745 offenbart ein Verfahren zur Erkennung von Fehlstellen in metallischen Bauteilen, welches ein elektrisches Aufheizen des zu prüfenden Bauteils vorsieht, wodurch fehler-charakteristische Temperatur-Muster erzeugt werden. Aus der sensorischen Erfassung der Infrarot-Strahlung eines solchen Temperatur-Musters soll dann auf das (Nicht-)Vorhandensein von Fehlstellen im Bauteil geschlossen werden. Die für die Umsetzung in die Praxis wichtigen Aspekte - wie beispielsweise eine nacharbeitbare Lehre zur genauen Ausgestaltung der induktiven Anregung bzw. zur Einkopplung der elektromagnetischen Energie in das zu prüfende Bauteil sowie der zeitliche Abstand zwischen Aufheizen und Messung - bleiben jedoch offen und ungeklärt.

Hierauf basierend ist aus DE 199 33 446 ein Fehlernachweisverfahren bekannt, bei dem ein gepulstes Hochfrequenzmagnetfeld in ein metallisches Bauteil eingekoppelt wird und die Temperaturverteilung einer durch Wirbelströme hervorgerufenen Erwärmung erfasst wird. Dieses Verfahren ist für die Prüfung von Turbinenschaufeln unter Werkstattbedingungen ausgelegt, welche relativ frei von störenden Umgebungseinflüssen (Witterung, Schmutz etc.) gestaltet werden kann. Für die Fehlererkennung in Eisenbahnschienen ist diese Lösung jedoch aus mehreren Gründen untauglich: zum einen ist die offenbarte Gestaltung der das Hochfrequenzmagnetfeld erzeugenden Spule für die Überprüfung von im Gleisbett verlegten Eisenbahnschienen ungeeignet, da diese nicht wie Turbinenschaufeln in eine mit ihren Wicklungen das Prüfobjekt umfassende Spule hineingeschoben werden können; zum anderen erbringt die für die Anregung gewählte Frequenz von bis zu 200 kHz (bzw. insbesondere 100 kHz) keine ausreichende Detektionsempfindlichkeit. Der größte Nachteil dieses offenbarten Verfahrens besteht jedoch darin, dass gemäss DE 199 33 446 die Temperaturverteilung in der Regel unmittelbar im Anschluss an einen Magnetfeldpuls erfasst werden soll (Zeile 3, Spalte 39 ff.). Dies führt in Konsequenz jedoch dazu, dass die das Magnetfeld erzeugende Spule das räumliche Erfassungsfeld der Detektions-Sensorik zumindest teilweise verdeckt, was sich ebenfalls nachteilig auf die Nachweisgüte auswirkt.

Zur Eliminierung des aus der Emissionscharakteristik (bzw. des Emissionsgrades) der Bauteil-Oberfläche resultierenden Einflusses auf das Messergebnis schlägt die US 3.378.685 schließlich den Einsatz zweier sukzessive aufeinander folgender, jeweils auf die Temperatur von flüssigem Stickstoff heruntergekühlter Infrarot-Detektoren vor, deren Messergebnisse in ein Verhältnis zueinander gesetzt werden. Unter Anwendung dieser Lehre kann zwar der Einfluss des Emissionsgrades unterdrückt werden, allerdings wird hiermit das mit einem niedrigen Emissionsgrad einhergehende niedrige optische Absorptionsvermögen metallischer Oberflächen nicht überwunden. Dies führt bei einer optischen Aufheizung letztlich zu einem schlechteren Fehlernachweisvermögen. Zudem ist eine solche Mess-Apparatur für den in der Praxis relevanten Einsatz - der nicht unter den kontrollierten Umgebungsbedingungen eines Messlabors stattfinden kann - technologisch zu aufwändig und zu teuer.

Der Erfindung liegt deshalb die Aufgabe zugrunde, ein Verfahren zur berührungslosen Detektion von Fehlstellen in Eisenbahnschienen zu entwickeln, durch das oberflächennahe Fehler bzw. von der Schienenoberfläche ausgehende flächige Fehler bereits in der Initiierungsphase mit hoher Zuverlässigkeit detektiert und einer quantitativen Bestimmung unterzogen werden können. Insbesondere ist eine mit hoher Erfassungsgeschwindigkeit arbeitende Detektionstechnologie bereit zu stellen, da die Prüfung von betrieblich genutzten Gleisen möglichst ohne restriktive Rückwirkungen auf den laufenden Zugbetrieb erfolgen soll. Es wird eine Prüfung unter Verwendung eines bis zum 70 km/h schnellen Schienenprüfzuges angestrebt.

Diese Aufgabe wird in Verbindung mit dem Oberbegriff des Patentanspruches 1 erfindungsgemäß dadurch gelöst, dass die Temperaturverteilung an der Oberfläche der mindestens einen zu prüfenden Schiene nach Ablauf einer Zeitspanne $t_m$ nach der Aufheizung der Schiene sensorisch erfasst wird, wobei die Zeitspanne $t_m$ durch die Beziehung

$$t_m = F \left( \rho c / \lambda \right)$$

mit

| | |
|---|---|
| F | = 1,5 mm² für eine mittlere Fehlertiefenlage von $z_m < 2$ mm |
| F = | 2,5 mm² für eine mittlere Fehlertiefenlage von $z_m >= 2$ mm |
| $z_m$ = | $(z_{min} + z_{max})/ 2$ |
| $z_{min}$ : | geringste Fehlertiefenlage |
| $z_{max}$: | maximale Fehlertiefenlage. |
| p: | Dichte |
| c: | spezifische Wärmekapazität |
| λ: | Wärmeleitfähigkeit des Schienenmaterials |

definiert ist. Umfangreiche Untersuchungen haben ergeben, dass nach dieser Zeit $t_m$ der maximale Temperaturkontrast (Temperatursignal) einer nachzuweisenden Fehlstelle zu erwarten ist.

Es ist in diesem Zusammenhang als selbstverständlich vorauszusetzen, dass dieses erfinderische Konzept nicht nur auf Schienen im eigentlichen Wortsinn, sondern auch auf sonstige im Gleis befindliche metallische Komponenten des Schienenfahrweges, insbesondere Weichenbauteile, angewandt werden kann.

Eine sinnvolle Ausgestaltung des erfinderischen Grundgedankens sieht vor, dass in die mindestens eine zu prüfende Schiene zu deren Aufheizung Wirbelströme mit einer Anregungsfrequenz von mindestens 200 kHz und einer Leistung von ca. 100 kW induziert werden. Hierbei ist eine Impulsdauer von circa 10 ms eine vorteilhafte Wahl, um eine geeignete Energieeinbringung in die Schiene zu gewährleisten.

Eine alternative Realisierungsmöglichkeit des erfinderischen Grundkonzeptes besteht darin, dass die oberflächennahe Aufheizung der Schiene mittels einer optischen Anregung und deren Einkopplung in die mindestens eine zu prüfende Schiene durchgeführt wird. Im Gegensatz zur induktiven Verfahrensvariante wird hierbei die Aufheizung der Schienenoberfläche durch Strahlungsabsorption erreicht. Unter der Randbedingung einer gegenüber der induktiven Lösung etwas verschlechterten Fehlerkennungsfähigkeit, lassen sich auf diese Weise gegenüber der induktiven Aufheizung deutliche Kosteneinsparungen erzielen. Es ist deshalb vorgesehen, dass in die mindestens eine zu prüfende Schiene zu deren Aufheizung Infrarotstrahlung mit einer Leistung von circa 50 kW induziert wird. Hierbei ist eine Impulsdauer von circa 0,4 s eine vorteilhafte Wahl, um eine geeignete Energieeinbringung in die Schiene zu gewährleisten.

Weitere Einzelheiten der Erfindung werden in nachfolgendem Ausführungsbeispiel anhand von Zeichnungen erläutert. Hierbei zeigen:

Figur 1:  Thermografiebild einer schräg (15° zur Normalen) unter der Oberfläche der Prüfschiene verlaufenden Flachbodenbohrung (Simulations-Modellierung für einen schräg einlaufenden Riss, sog. "Squad")
Figur 2:  in Grauwerten codierter Temperaturverlauf entlang Fahrtrichtung (5)
Figur 3:  apparativer Vorrichtungsaufbau

Zur modellhaften Simulation eines schräg in eine Schiene hinein verlaufenden oberflächennahen Riss, eines sog. "Squat", ist eine von der Rückseite der zu prüfenden Schiene (3) eingebrachte Flachbodenbohrung mit einem Durchmesser von 6 mm vorgesehen, die unter einem Winkel von 15° gegen die Normale zur Oberfläche in die Schiene gebohrt wurde. Die Bohrung wurde derart eingebracht, dass die geringste Tiefenlage unter der Schienenoberfläche (Vorderseite) 1,0 mm beträgt, Die maximale Tiefenlage beträgt 2,5 mm, wobei die mittlere Tiefenlage 1,75 mm beträgt.

Mittels induktiver Anregung durch eine Flachspule (in Verbindung mit einem Hochfrequenzgenerator) wird die Schiene (3) von ihrer Vorderseite her erwärmt. Es ist in diesem Zusammenhang besonders vorteilhaft, wenn die rechteckförmige Flachspule (Aufsatzspule) mit einer Windungsanzahl von circa 2 bis 6 Windungen ausgeführt ist, wobei die Flächennormale der Flachspule senkrecht zur Schienenlauffläche orientiert ist. Alternativ kann das Mittel zur Einkopplung hochfrequenter elektromagnetischer Felder vorteilhaft auch als quaderförmige Spule (Spulenform, die sich ergibt, wenn man einen Draht auf einen quaderförmigen Körper wickelt) mit circa 2 bis 6 Windungen ausgeführt werden. In diesem Falle ist die Spulenachse (Symmetrieachse durch die Spule hindurch) parallel zur Schienenoberfläche (bzw. Schienenlauffläche) und senkrecht zur Schienenlängsachse zu orientieren. Durch derart gestaltete Spulengeometrien und die relativ geringen Windungszahlen wird eine günstige Anpassung der Spulenfelder an die Schienengeometrie ermöglicht, wodurch eine gute Energieeinkopplung und eine homogene Aufheizung der Schienen erreicht werden kann. Ebenso hat es sich als zweckmäßig erwiesen, wenn der freie Abstand des Spulensystems zur Oberfläche der mindestens einen zu prüfenden Schiene circa 6 bis 10 mm beträgt. Auf diese Weise wird sichergestellt, dass zum einen die Kollisionsgefahr zwischen Prüfvorrichtung und Schienenoberfläche auch unter den dynamischen Einflüssen einer mit 70 km/h ablaufenden Messfahrt verringert wird, zugleich aber auch eine zu starke Verschlechterung der Energieeinkopplung vermieden wird.

Die Aufheizung erfolgt dabei infolge von Wirbelstromverlusten, die durch die induzierten Wirbelströme bedingt sind. Wird die Anregungsfrequenz geeignet gewählt, so wird die Wärme während der impulsartigen Anregungszeit im oberflächennahen Bereich erzeugt und strömt in der Folge ins Materialinnere. Squads und Head Checks (schräg einlaufende Risse) stören die Ausbreitung der Wärme. Die Fehlstellen bilden somit zu bestimmten Zeiten nach der impulsförmigen Anregung einen maximalen Temperaturkontrast an der Oberfläche aus. Erfindungsgemäß können durch Messung der Temperatur zu einer geeignet gewählten Zeit nach der Aufheizung alle Fehlstellen, die zu der betreffenden Auswertezeit einen ausreichend hohen Temperaturkontrast verursachen, erkannt werden.

Im konkreten Beispiel wird die sich einstellende Temperaturverteilung im zeitlichen Abstand von 200 ms mittels einer Infrarot-Kamera (2) erfasst.

Zusätzlich ist ein Mittel (4) zum Aufbringen einer Benetzung auf die zu überprüfende Oberfläche der Schiene (3) vorgesehen. Eine derartige Benetzung erhöht das Emissionsvermögen der Schienenoberfläche beträchtlich und ermöglicht somit eine verbesserte Fehler-Erkennbarkeit. Eine sinnvolle Ausgestaltung sieht die Verwendung eines Wasserfilms oder eines Farb-/Wassergemisches vor, wobei das Mischungsverhältnis zwischen Farbe und Wasser bevorzugt im Bereich von etwa 1:5 bis 1:10 liegt.

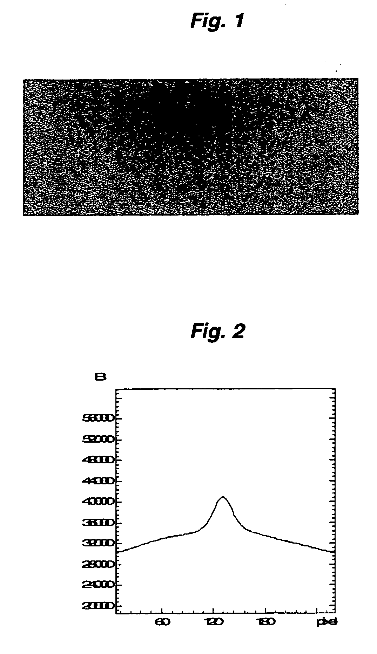

Figur 1 zeigt das auf diese Weise gewonnene Thermographiebild. Die Fehlstelle ist anhand des relativ zur Umgebung ausgeprägten Temperaturkontrastes deutlich zu erkennen. Die Fehlstelle wird mit einem guten Signal-Rauschabstand abgebildet. Der in Figur 2 auf der Basis einer Grauwert-Analyse von Figur 1 ermittelte Temperaturverlauf verdeutlicht dies.

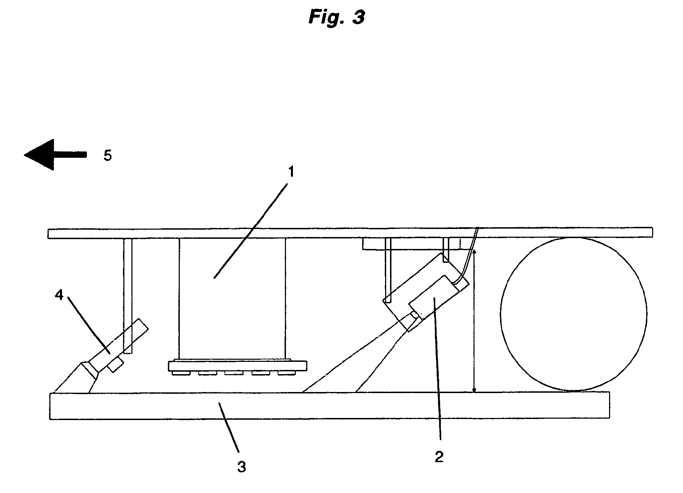

Figur 3 zeigt die erfindungsgemäß vorgeschlagene Lösung hinsichtlich der apparativen Konfiguration der Detektionsvorrichtung.

Für die oberflächennahe Aufzeizung der mindestens einen zu prüfenden Schiene kann - alternativ zum Einkoppeln von Wirbelströmen - auch ein Infrarotstrahler mit einem freien Abstand von circa 20 mm zur Oberfläche der zu prüfenden Schiene angebracht werden. Ein geringerer Abstand bringt keine Vorteile hinsichtlich der Energieeinbringung, erhöht aber die Gefahr einer Kollision. Deutlich größere Abstände verschlechtern jedoch die Aufheizung und damit das Nachweisvermögen der Technik.

## Bezugszeichenliste:

1    Heizvorrichtung
2    Infrarot-Kamerasystem
3    Schiene (Prüfobjekt)
4    Beschichtungsvorrichtung
5    Fahrtrichtung

## Patentansprüche

1.    Verfahren zur berührungslosen Detektion von Fehlstellen in Eisenbahnschienen, bei dem die zu prüfende Eisenbahnschiene (3) in einer oberflächennahen Randschicht entlang der zu prüfenden Fläche aufgeheizt wird, **dadurch gekennzeichnet, dass** die Temperaturverteilung an der Oberfläche der mindestens einen zu prüfenden Schiene (3) nach Ablauf einer Zeitspanne $t_m$ nach der Aufheizung der Schiene (3) sensorisch erfasst wird, wobei die Zeitspanne $t_m$ durch die Beziehung

$$t_m = F\ (\rho\ c\ /\ \lambda)$$

mit

F = 1,5 mm$^2$ für eine mittlere Fehlertiefenlage von $z_m$ < 2 mm
F = 2,5 mm2 für eine mittlere Fehlertiefenlage von $z_m$ >= 2 mm
$z_m = (z_{min} + z_{max})\ /\ 2$
$z_{min}$: geringste Fehlertiefenlage
$_{max}$: maximale Fehlertiefenlage.
p: Dichte
c: spezifische Wärmekapazität
λ: Wärmeleitfähigkeit des Schienenmaterials

definiert ist.

2.    Verfahren zur berührungslosen Detektion von Fehlstellen in Eisenbahnschienen nach Anspruch 1, **dadurch gekennzeichnet, dass** in die mindestens eine zu prüfende Schiene (3) zu deren Aufheizung Wirbelströme mit einer Anregungsfrequenz von mindestens 200 kHz und einer Leistung von ca. 100 kW induziert werden.

3. Verfahren zur berührungslosen Detektion von Fehlstellen in Eisenbahnschienen nach Anspruch 2, **dadurch gekennzeichnet, dass** die Aufheizdauer ca. 10 ms beträgt.

4. Verfahren zur berührungslosen Detektion von Fehlstellen in Eisenbahnschienen nach Anspruch 1, **dadurch gekennzeichnet, dass** in die mindestens eine zu prüfende Schiene (3) zu deren Aufheizung Infrarotstrahlung mit einer Leistung von circa 50 kW induziert wird.

5. Verfahren zur berührungslosen Detektion von Fehlstellen in Eisenbahnschienen nach Anspruch 4, **dadurch gekennzeichnet, dass** die Aufheizdauer circa 0,4 s beträgt.

6. Verfahren zur berührungslosen Detektion von Fehlstellen in Eisenbahnschienen nach einem der Ansprüche 1 bis 5, **dadurch gekennzeichnet, dass** vor Aufheizung und Erfassung der Temperaturverteilung eine Benetzung der Oberfläche der zu prüfenden Schiene (3) mit einer emissionsgraderhöhenden Schicht durchgeführt wird.

7. Verfahren zur berührungslosen Detektion von Fehlstellen in Eisenbahnschienen nach einem der Ansprüche 1 bis 6, **dadurch gekennzeichnet, dass** die sensorisch erfasste Temperaturverteilung mit dem Ausgangssignal eines Ortssignalgebers gekoppelt und in einer Aufzeichnungseinheit gespeichert wird.

**Claims**

1. A method for the contactless detection of defective spots in railway rails, in which the railway rail (3) to be checked is heated along the surface to be checked in an outer layer near the surface, **characterized in that** the temperature distribution on the surface of the at least one rail (3) to be checked is measured by means of sensors after a duration $t_m$ elapses after the heating of the rail (3), wherein the duration $t_m$ is defined by the relation

$$t_m = F \ (p \ c \ / \ \lambda)$$

with
$F = 1.5 \, mm^2$ for an average defect depth of $z_m < 2 \, mm$
$F = 2.5 \, mm^2$ for an average defect depth of $z_m \geq 2 \, mm$
$z_m = (z_{min} + z_{max}) / 2$
$z_{min}$: minimum defect depth
$z_{max}$: maximum defect depth

p: density
c: specific heat capacity
$\lambda$: thermal conductivity of the rail material.

2. The method for the contactless detection of defective spots in railway rails according to Claim 1, **characterized in that** eddy currents with an excitation frequency of at least 200 kHz and a power of approximately 100 kW are induced into the at least one rail (3) to be checked in order to heat said rail.

3. The method for the contactless detection of defective spots in railway rails according to Claim 2, **characterized in that** the heating time amounts to approximately 10 ms.

4. The method for the contactless detection of defective spots in railway rails according to Claim 1, **characterized in that** infrared radiation with a power of approximately 50 kW is induced into the at least one rail (3) to be checked in order to heat said rail.

5. The method for the contactless detection of defective spots in railway rails according to Claim 4, **characterized in that** the heating time amounts to approximately 0.4 s.

6. The method for the contactless detection of defective spots in railway rails according to one of Claims 1 to 5, **characterized in that** the surface of the rail (3) to be checked is wetted with a layer that increases the emissivity before the heating process and the measurement of the temperature distribution.

7. The method for the contactless detection of defective spots in railway rails according to one of Claims 1 to 6, **characterized in that** the temperature distribution measured by means of sensors is coupled with the output signal of a position signal transmitter and stored in a recording unit.

**Revendications**

1. Procédé de détection sans contact de points défectueux de rails de chemin de fer, dans lequel le rail de chemin de fer à contrôler (3) est chauffé dans une couche périphérique proche de la surface le long de la surface à contrôler, **caractérisé en ce que** la répartition de température sur la surface de l'au moins un rail à contrôler (3) est enregistrée par capteur après écoulement d'un laps de temps $t_m$ après le chauffage du rail (3), le laps de temps $t_m$ étant défini par l'équation

$$t_m = F \ (\rho \ c \ / \ \lambda)$$

avec

F = 1,5 mm$^2$ pour une situation moyenne de profondeur du défaut de $z_m$ < 2 mm

F = 2,5 mm$^2$ pour une situation moyenne de profondeur du défaut de $z_m \geq$ 2 mm

$z_m = (z_{min} + z_{max})/2$

$z_{min}$ : situation minimale en profondeur du défaut

$z_{max}$ : situation maximale en profondeur du défaut

$\rho$ : épaisseur

c : capacité thermique spécifique

$\lambda$ : conductivité thermique de la matière du rail.

2. Procédé de détection sans contact de points défectueux de rails de chemin de fer selon la revendication 1, **caractérisé en ce que**, dans l'au moins un rail à contrôler (3), on induit pour le chauffer des courants de Foucault d'une fréquence d'excitation d'au moins 200 kHz et d'une puissance d'environ 100 kW.

3. Procédé de détection sans contact de points défectueux de rails de chemin de fer selon la revendication 2, **caractérisé en ce que** la durée de chauffage est d'environ 10 ms.

4. Procédé de détection sans contact de points défectueux de rails de chemin de fer selon la revendication 1, **caractérisé en ce qu'**on induit pour le chauffer dans l'au moins un rail à contrôler (3) un rayonnement infrarouge d'une puissance d'environ 50 kW.

5. Procédé de détection sans contact de points défectueux de rails de chemin de fer selon la revendication 4, **caractérisé en ce que** la durée de chauffage est d'environ 0,4 s.

6. Procédé de détection sans contact de points défectueux de rails de chemin de fer selon une des revendications 1 à 5, **caractérisé en ce qu'**avant de chauffer et d'enregistrer la répartition de température, on constitue un système de réseau sur la surface du rail à contrôler (3) à l'aide d'une couche augmentant le degré d'émission.

7. Procédé de détection sans contact de points défectueux de rails de chemin de fer selon une des revendications 1 à 6, **caractérisé en ce que** la répartition de température enregistrée par capteur est couplée au signal de sortie d'un émetteur de signal local et sauvegardée dans une unité d'enregistrement.

## Fig. 1

## Fig. 2

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025066
- US 3020745 A
- DE 19933446
- US 3378685 A

**In der Beschreibung aufgeführte Nicht-Patentliteratur**

- **J. TRIPSCHU.** Einsatz von Schienenprüfzügen im Bereich Netz. *2. Fachtagung der DGZFP zur zerstörungsfreien Prüfung im Eisenbahnwesen, Wittenberge,* Marz 2002
- **R. KRULL ; H. HINTZE ; H-M.THOMAS ; T.HECKL.** Zerstörungsfreie Prüfung an Schienen heute und in der Zukunft. *ZEVrail Glasers Annalen 127,* Juni 2003